(19)

Europäisches Patentamt
European Patent Office
Office européen des brevets

(11) **EP 3 339 840 A1**

(12) **EUROPEAN PATENT APPLICATION**

(43) Date of publication:
**27.06.2018 Bulletin 2018/26**

(51) Int Cl.:
**G01N 21/3563** (2014.01) **B07C 5/342** (2006.01)
**G01N 33/44** (2006.01) **B29B 17/02** (2006.01)
**G01N 21/84** (2006.01)

(21) Application number: **17203306.0**

(22) Date of filing: **23.11.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **20.12.2016 JP 2016247022**

(71) Applicant: **Panasonic Intellectual Property Management Co., Ltd.**
**Osaka-shi, Osaka 540-6207 (JP)**

(72) Inventors:
• **HAMADA, Shingo**
**Osaka, 540-6207 (JP)**
• **MIYAMAE, Nobuhiko**
**Osaka, 540-6207 (JP)**

(74) Representative: **Vigand, Philippe et al**
**Novagraaf International SA**
**Chemin de l'Echo 3**
**1213 Onex - Genève (CH)**

(54) **RESIN DETERMINING METHOD AND RESIN DETERMINING APPARATUS**

(57)     There is provided A resin determining method including: irradiating a sorting target with infrared light; receiving reflected light from the sorting target irradiated with the infrared light; obtaining correlation information between spectral intensity obtained by excluding a wavelength band of equal to or longer than 4.18 μm and equal to or shorter than 4.42 μm of a reflection or absorption spectrum obtained with the reflected light and spectrum data of one or more resin types which is acquired in advance; and determining the correlation information, which is equal to or higher than a preset threshold value and is a highest value, as a resin type of the sorting target.

FIG. 1

**Description**

BACKGROUND

1. Technical Field

The present disclosure relates to a resin determining method and a resin determining apparatus of resin types from a sorting target in which a plurality of types of small pieces are gathered.

2. Description of the Related Art

Global environmental problems such as global warming or depletion of resource arise due to mass consumption and mass disposal types of economic activities.

In such a circumstance, with an aim of building a resource recycling society, the Home Appliance Recycling Law has been enforced in Japan since April, 2001. By the Home Appliance Recycling Law, it is mandatory to recycle used home appliances (an air conditioner, a television, a refrigerator, a freezer, a washing machine, a clothes dryer, and the like). In this manner, after the used home appliances are crushed in a home appliance recycling factory, sorting and collecting for each material type are performed using magnetism, wind power, vibration, or the like, and the home appliances are recycled as recycled materials. Regarding a resin material, polypropylene (hereinafter, referred to as PP), polystyrene (hereinafter, referred to as PS), or acrylonitrile·butadiene·styrene (hereinafter, referred to as ABS) is widely used in home appliances. The resins are sorted and collected for each resin type by a sorting apparatus that uses light absorption characteristics in a near infrared region (wavelength range of 1 to 3 $\mu$m) due to a molecular structure of the resin.

The sorting apparatus is capable of irradiating small pieces conveyed on a conveyor with light including the near infrared region, detecting a reflection or absorption spectrum from a resin in a non-contact manner, and determining a resin type. Therefore, the sorting apparatus is capable of performing a sorting process on a large amount of small pieces.

However, a black resin or the like including carbon black (carbon-based fine particles), which is used in small home appliances, automobiles, or the like, is likely to absorb the light in the near infrared region, and thus a crucial problem arises in that a reflection or absorption spectrum is not obtained, and thus it is not possible to perform sorting.

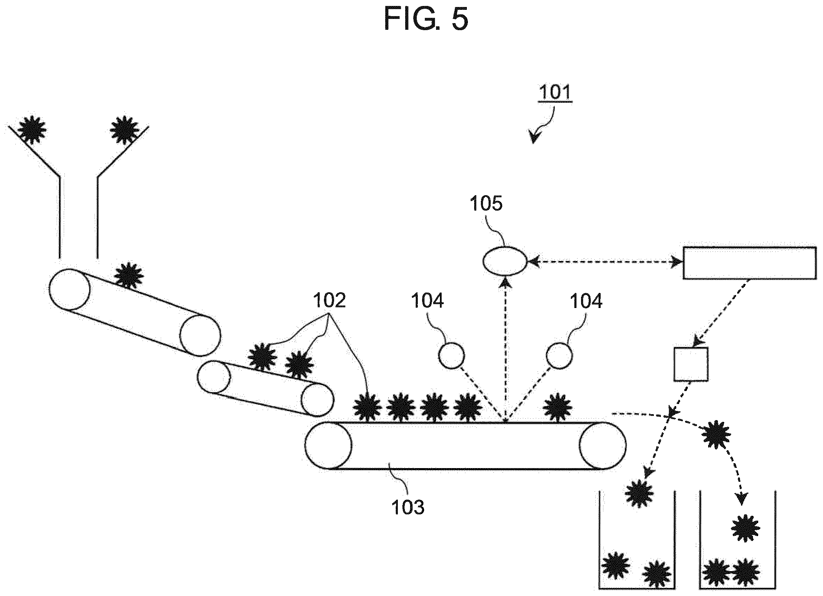

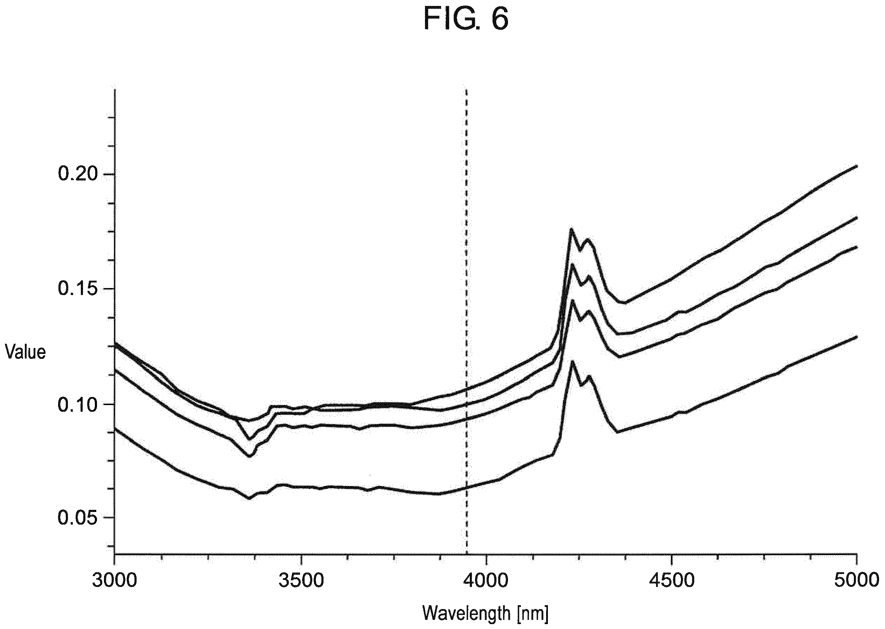

Regarding the recycling of resin materials, Japanese Patent No. 5367145 proposes an apparatus in consideration of the problem described above. In a technology disclosed in Japanese Patent No. 5367145, there is provided material identifying apparatus 101 for waste black plastics as illustrated in FIG. 5, in which waste black plastic piece 102 on conveyor 103 is irradiated with infrared light from infrared light source 104 and mid-infrared sensor 105 detects reflected light. A reflection spectrum of a mid-infrared region (wavelength region of 3 to 5 $\mu$m) in which an influence of carbon black decreases as illustrated in FIG. 6 is acquired, and thereby it is possible to discriminate not only a white resin in which carbon black is not contained, but also a black resin.

SUMMARY

According to an aspect of the disclosure, there is provided a resin determining method including:

irradiating a sorting target with infrared light;
receiving reflected light from the sorting target irradiated with the infrared light;
obtaining correlation information between spectral intensity obtained by excluding a wavelength band of equal to or longer than 4.18 $\mu$m and equal to or shorter than 4.42 $\mu$m of a reflection or absorption spectrum obtained with the reflected light and spectrum data of one or more resin types which is acquired in advance; and
determining the correlation information, which is equal to or higher than a preset threshold value and is a highest value, as a resin type of the sorting target.

According to another aspect of the disclosure, there is provided a resin determining apparatus including:

an irradiator that irradiates a sorting target with infrared light;
a light receptor that receives reflected light from the sorting target irradiated with the infrared light from the irradiator; and
an arithmetic processor that determines a resin type of the sorting target from a reflection or absorption spectrum of a resin which is the sorting target based on the reflected light.

The arithmetic processor includes

a spectrum processor that obtains spectral intensity obtained by excluding a wavelength band of equal to or longer than 4.18 $\mu$m and equal to or shorter than 4.42 $\mu$m of the reflection or absorption spectrum;

a spectrum evaluator that obtains correlation information between spectral intensity acquired by the spectrum processor and spectrum data of one or more resin types which is acquired in advance; and

a determiner that determines the correlation information, which is equal to or higher than a preset threshold value and is the highest value, of the correlation information obtained by the spectrum evaluator as a resin type of the sorting target.

As described above, in the resin determining method and apparatus according to the aspects of the disclosure, when determination and sorting of the resin from the sorting target are performed by using the reflection or absorption spectrum obtained in the mid-infrared region, it is possible to discriminate between resin types of the sorting target with high accuracy regardless of color of the resin without an influence of light absorption by carbon dioxide by using the spectral intensity obtained by excluding the wavelength band of equal to or longer than 4.18 $\mu$m and equal to or lower than 4.42 $\mu$m in which carbon dioxide influences the light absorption.

BRIEF DESCRIPTION OF THE DRAWINGS

FIG. 1 is a schematic diagram of a resin determining apparatus according to Embodiment 1 of the disclosure;
FIG. 2 is a graph of a resin spectrum obtained in Embodiment 1 of the disclosure;
FIG. 3 is a graph of a resin spectrum used in determination in Embodiment 1 of the disclosure;
FIG. 4 is a flowchart illustrating flow of determining a resin by a resin determining apparatus in Embodiment 1 of the disclosure;
FIG. 5 is a schematic diagram of an apparatus for resin determination in the related art which is disclosed in Japanese Patent No. 5367145; and
FIG. 6 is a graph of a black reflection spectrum derived from an automobile for resin determination in the related art which is disclosed in Japanese Patent No. 5367145.

DETAILED DESCRIPTION

Before an embodiment is described, a problem in the related art is briefly described.

In a case of sorting a large amount of resin, it is necessary to perform processing at a high speed. Therefore, the resins need to be conveyed on a conveyor or the like at a high speed and to discriminate between resin types at a high speed. Therefore, for discriminating between a large amount of resins, it is not possible to use a method of measurement performed in direct contact with a sorting target as performed in an analyzer such as a Fourier-transform infrared spectroscopy (FT-IR), but a method of continual measurement of sorting targets in a non-contact manner by using an infrared spectroscopy camera needs to be used.

In addition, in order to determine a resin type regardless of color of the resins, it is necessary to measure a reflection or absorption spectrum in a mid-infrared region (region having a wavelength of 3 to 5 $\mu$m) in a band in which carbon black has a small influence.

However, in a case where the reflection or absorption spectrum obtained from a sorting target in a non-contact manner is measured, air exists as a medium between the sorting target and a detecting light receptor. Therefore, there is an influence of carbon dioxide on the spectrum in the mid-infrared region which is a discriminating region, and it is difficult to discriminate between the resin types with high accuracy.

The disclosure is made to solve the problem arising in the related art, and an object thereof is to provide a resin determining method and a resin determining apparatus that discriminates between the resin types with high accuracy regardless of the color of the resin without an influence of carbon dioxide on the spectrum when determination and sorting of the resin are performed by using the reflection or absorption spectrum obtained in the mid-infrared region.

Hereinafter, an embodiment of the disclosure will be described in detail with reference to the figures.

Embodiment 1

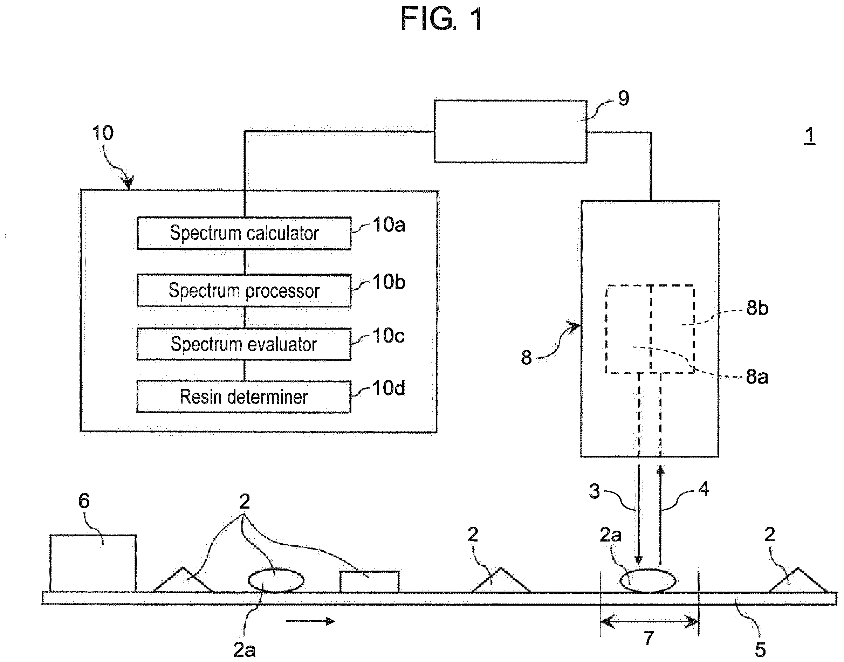

FIG. 1 is a schematic diagram of resin determining apparatus 1 according to Embodiment 1.

Resin 2 is an example of a sorting target and is a resin of which a resin type such as a white resin or a black resin including carbon black (carbon-based fine particles) is unknown. A configuration of resin determining apparatus 1 that determines the resin type of resin 2 with high accuracy is described with reference FIG. 1.

Resin determining apparatus 1 includes at least arithmetic processor 10 and infrared detecting unit 8 having irradiator 8a and light receptor 8b.

The irradiator 8a irradiates resin 2 which is an example of the sorting target with infrared light 3.

Light receptor 8b receives reflected light 4 from resin 2 irradiated with the infrared light from irradiator 8a.

Arithmetic processor 10 determines the resin type of the sorting target from the reflection or absorption spectrum of resin 2 based on reflected light 4.

Specifically, arithmetic processor 10 includes at least spectrum processor 10b, spectrum evaluator 10c, and determiner 10d. Arithmetic processor 10 may further include spectrum calculator 10a that calculates a reflection or absorption spectrum of resin 2 based on reflected light 4.

Spectrum processor 10b obtains spectral intensity obtained by excluding a wavelength band of equal to or longer than 4.18 $\mu$m and equal to or shorter than 4.42 $\mu$m of the reflection or absorption spectrum.

Spectrum evaluator 10c obtains a plurality of items of correlation information between spectral intensity acquired by spectrum processor 10b and spectrum data of one or more resin types which is acquired in advance.

determiner 10d determines the correlation information, which is equal to or higher than a preset threshold value and is the highest value, of the plurality of items of correlation information obtained by spectrum evaluator 10c, as a resin type of the sorting target.

Infrared detecting unit 8 has a function of irradiating resin 2 with infrared light and has a function of receiving reflected light 4 from resin 2 irradiated with infrared light 3. Arithmetic processor 10 is connected to infrared detecting unit 8 via digital data converter 9.

Digital data converter 9 converts an electric signal output by infrared detecting unit 8 depending on reflected light 4 into digital data.

In arithmetic processor 10, spectrum calculator 10a calculates the reflection spectrum of resin 2 based on digital data output from digital data converter 9.

In FIG. 1, a belt of belt conveyor 5 moves at a constant speed and is an example of a conveyor that conveys resin 2. Belt conveyor 5 conveys resin 2 from loading region 6 to detecting region 7 in a longitudinal direction of belt conveyor 5.

In addition, infrared detecting unit 8 is disposed above detecting region 7 of belt conveyor 5. Arithmetic processor 10 analyzes information output from digital data converter 9 and obtains the reflection spectra of resin 2 by spectrum calculator 10a. In addition, arithmetic processor 10 causes spectrum processor 10b to perform processing such that the obtained reflection spectrum is likely to be determined and the spectral intensity is acquired by excluding a band (for example, a wavelength band of equal to or longer than 4.18 $\mu$m and equal to or shorter than 4.42 $\mu$m) in which carbon dioxide has an influence. Further, arithmetic processor 10 causes spectrum evaluator 10c to compare the spectrum data of a resin type registered in advance to the detected reflection spectral intensity and determiner 10d to determine the resin type.

A method of calculating the reflection spectral intensity by arithmetic processor 10 from digital data input to arithmetic processor 10 is briefly described.

An electric signal, which is photoelectrically converted depending on reflected light 4 by infrared detecting unit 8, depends on the intensity of received light. Hence, it is possible to acquire information of intensity of reflected light 4 from resin 2 from digital data converted by digital data converter 9. It is possible to obtain reflection spectral intensity of resin 2 from the acquired intensity of reflected light 4 by spectrum calculator 10a. From the reflection spectral intensity, spectrum processor 10b performs processing to obtain reflection spectral intensity for determining the resin type by excluding an absorption band of carbon dioxide and determines the resin type of resin 2.

Here, before a method of determining the resin type according to Embodiment 1 is described, an influence of the absorption by carbon dioxide in the mid-infrared region (region having a wavelength of 3 to 5 $\mu$m) on the discrimination is described.

Carbon dioxide in the atmosphere is an unsaturated molecule having a linear structure and has, as molecular vibration, four types of vibration such as two types of bending vibration, symmetric stretching vibration, and antisymmetric stretching vibration. The two types of bending vibration mean a motion having a cyclic change in a valence angle around a carbon atom, and light absorption occurs around the vicinity of 15.0 $\mu$m. In addition, the symmetric stretching vibration is vibration symmetrical with respect to a direction of the atomic valence and does not have fixed bipolar efficiency unlike the carbon dioxide. Therefore, the symmetric stretching vibration does not appear in the infrared spectrum. However, in the antisymmetric stretching vibration as vibration which is asymmetrical with respect to the direction of the atomic valence, light absorption occurs around the vicinity of 4.25 $\mu$m. Additionally, since the carbon dioxide has a gas phase in the atmosphere and is excited more than the solid or liquid molecular vibration, the absorption spectrum appears more remarkable.

In the mid-infrared region (region having a wavelength of 3 to 5 $\mu$m), infrared absorption due to the antisymmetric stretching vibration occurs. When the reflection or absorption spectrum is obtained from a target in a non-contact manner, air between the target and a detecting element exists as a medium, and thus the detected spectrum is influenced by the carbon dioxide.

In particular, in the ABS containing a nitrile, an absorption peak due to the stretching vibration of $C \equiv N$ appears around the vicinity of the wavelength of 4.48 $\mu$m by the nitrile, and a characteristic absorption spectrum exists in the vicinity of an absorption band of the carbon dioxide. However, an absorption peak of the carbon dioxide appears more remarkable than the characteristic absorption peak for identifying ABS, it is difficult to perform the determination.

The inventors found a method of determining the resin type, that is, a method of determining the resin according to Embodiment 1 with high accuracy even in a case where the absorption band of the carbon dioxide is close to a resin specific absorption band, similar to ABS or the like.

Next, according to Embodiment 1, results of an experiment performed based on a principle of the method of determining the resin with high accuracy will be described.

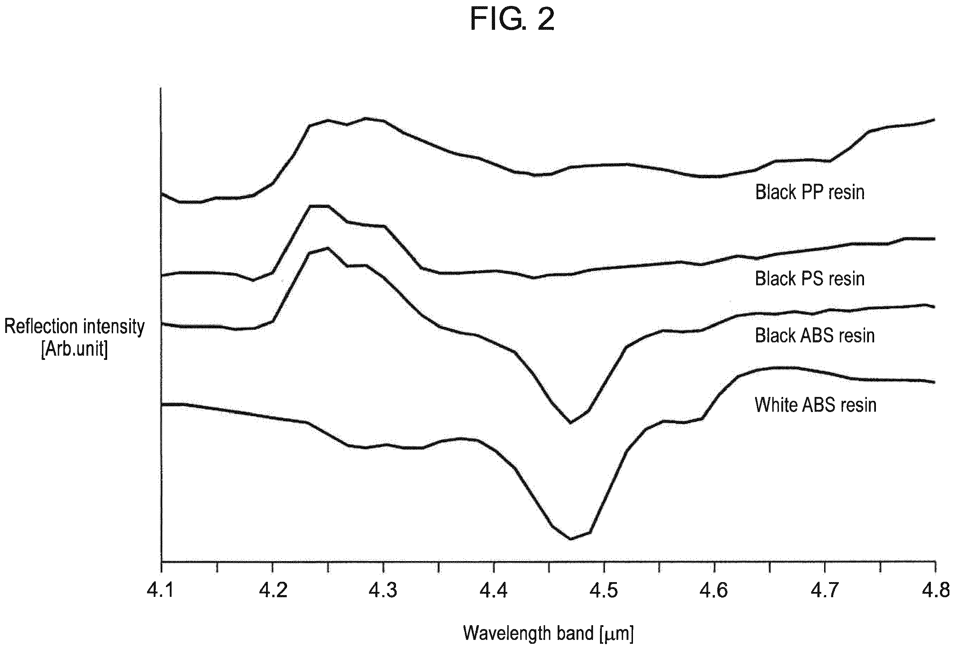

As illustrated in FIG. 2, the experiment was performed using four samples of a black ABS resin, a black PS resin, and a black PP resin which are derived from home appliances containing carbon black, and a white ABS resin derived from home appliances that do not contain carbon black, and the reflection spectral intensity in a range of 4.10 $\mu$m to 4.80 $\mu$m in the resins was obtained.

FIG. 2 illustrates the reflection spectral intensity obtained from the black ABS resin. In the graph in FIG. 2, the horizontal axis represents a wavelength band, and the vertical axis represents the reflection intensity. From the results in FIG. 2, attenuation of the reflection intensity around the vicinity of the wavelength of 4.48 $\mu$m due to the stretching vibration of $C \equiv N$ of the nitrile derived from ABS was confirmed. In addition, in the vicinity of the peak of the nitrile, the peak of the reflection spectral intensity appears around the vicinity of the wavelength of 4.25 $\mu$m. However, this is because of the influence by the carbon dioxide described above.

In addition, in the reflection spectra of the black PS resin and the black PP resin in FIG. 2, both of the blacks do not contain the nitrile, and thus no attenuation around the vicinity of the wavelength of 4.48 $\mu$m was confirmed. On the other hand, in the reflection spectra around the vicinity of 4.25 $\mu$m, it is possible to confirm that both of the black PS resin and the black PP resin have peak similar to the black ABS resin.

Similarly, in the reflection spectrum of the white ABS resin in FIG. 2, similar to the black ABS resin, attenuation of the reflection intensity around the vicinity of 4.48 $\mu$m due to the stretching vibration of $C \equiv N$ of nitrile derived from ABS was confirmed. Although the influence by the carbon dioxide does not have a high peak found in the three black resins, slight influence was confirmed.

A correlation coefficient was obtained as an example of the correlation information by using four types of reflection spectral intensities, and verification of whether the discrimination therebetween can be performed was conducted. The correlation coefficient $r$ is obtained from Expression (1).

$$r = \frac{\sum (x - \bar{x})(y - \bar{y})}{\sqrt{\sum (x - \bar{x})^2 \sum (y - \bar{y})^2}} \qquad \cdots \quad (1)$$

Here, x : x represents the reference spectral intensity, y : y represents the comparative spectral intensity, $\bar{x}$ : $\bar{x}$ represents the average intensity of reference spectra, and $\bar{y}$ : $\bar{y}$ represents the average intensity of comparative spectra.

Using Expression (1), as correlation coefficients of resins obtained in a case where the reflection spectrum of the black ABS resin is a reference spectrum, the black PS resin has 0.79, the black PP resin has 0.55, and the white ABS resin has 0.61. Regarding the correlation efficient, the higher the degree of coincidence with the reference spectrum, the closer the absolute value of the correlation coefficient is to 1. Therefore, the black PS resin has a higher degree of coincidence with the black ABS resin than the white ABS resin. This is because the wavelength region on which the carbon dioxide has a large influence that is remarkable on the black resin is determined that the degree of coincidence is high.

Before determination is performed using the correlation coefficient or the like from the reflection spectra obtained in the experiment, the inventors consider that it is possible to determine the resin type with high accuracy by removing the wavelength region on which the carbon dioxide has influence.

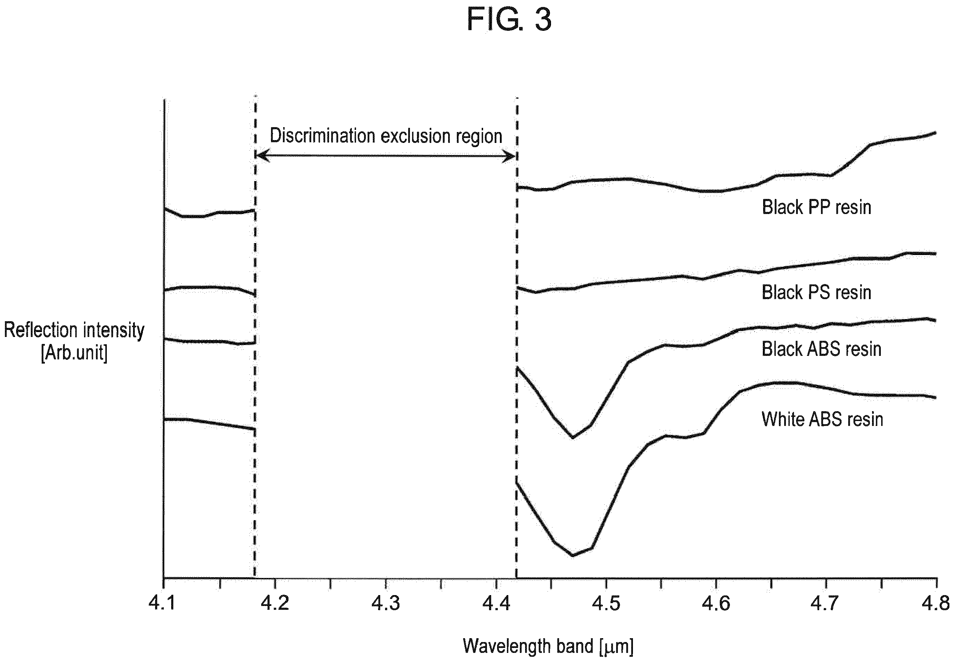

Specifically, as illustrated in FIG. 3, standard deviation is obtained by using reflection spectral intensity of resins which is obtained by excluding, as a discrimination exclusion region, a band of 4.18 $\mu$m to 4.42 $\mu$m and showing influences of carbon dioxide, from the obtained reflection spectral intensity. As a result, in a case where the reflection spectral intensity of the black ABS resin is used as the reference spectrum, as the standard deviation, the black PS resin has 0.64, the black PP resin has 0.29, and the white ABS resin has 0.98. In this manner, when a threshold value is 0.7, a resin having the standard deviation equal to or higher than the threshold value can be discriminated as the ABS resin.

From this result, it is possible to perform the discrimination without erroneous determination even with the ABS resin or the like having the absorption peak of nitrile which is significantly influenced by carbon dioxide. In addition, even when the absorption peak does not exist in the vicinity of the band in which the influence of the carbon dioxide is found, it is possible to perform the discrimination with high accuracy by using the method described above in a case where this band is included during the discrimination.

Next, a method of detecting a resin type by using resin determining apparatus 1 will be described.

A light source of irradiator 8a that performs irradiation with infrared light 3 in infrared detecting unit 8 has a broad wavelength region of the black light source or the like or has two or more single-wavelength light source having an absorption wavelength region of a resin that is determined. In addition, a light receiving element of light receptor 8b in infrared detecting unit 8 includes a light receiving element that receives reflected light 4 for each wavelength from the light source. Digital data converter 9 converts analog data from the light receiving element into digital data and transmits the converted data to arithmetic processor 10. Arithmetic processor 10 calculates the reflection intensity of each wavelength, that is, the spectral intensity, based on a digital data output transmitted from the light receiving element and determines the resin type by evaluating the spectral intensity obtained by excluding the band in which the carbon dioxide has an influence.

Specifically, spectral intensity is acquired as a sample from a resin of which physical properties are already known, a spectral intensity for determination is obtained by excluding the band, in which the carbon dioxide has an influence, from spectral intensity obtained from the resin as a determination target, a correlation coefficient of the obtained spectral intensity and the spectral intensity of the sample is calculated by Expression (1), and a resin type is determined by a determination algorithm in which the results of the calculation and the preset threshold value are compared to each other. Here, a method of using the correlation coefficient as the determination algorithm is described; however, in addition to the method, a method of using regression analysis or the like is appropriately selected.

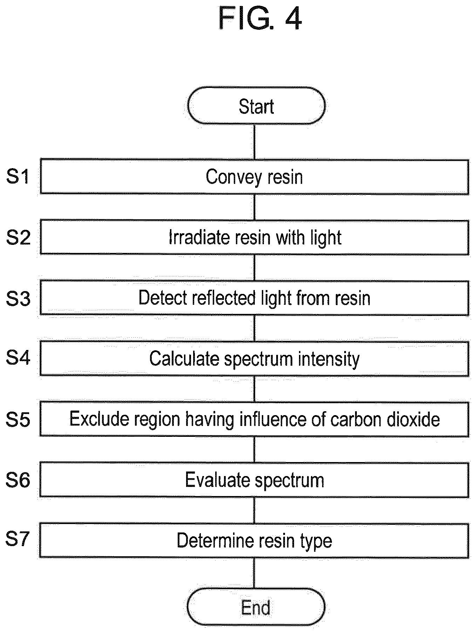

Next, an operation of resin determining apparatus 1 in Fig. 1 will be described based on a flowchart in FIG. 4.

Here, flow for determining a resin type, by focusing on one resin 2a of a plurality of resins 2 is described. Here, the resin 2a is the ABS resin.

First, in Step S1, the resin 2 is loaded in loading region 6 on belt conveyor 5, which moves at a constant speed, and is conveyed to detecting region 7.

Subsequently, in Step S2, infrared detecting unit 8 irradiates the resin 2a reaching detecting region 7 with infrared light 3 from the light source.

Subsequently, in Step S3, infrared detecting unit 8 detects reflected light 4 from resin 2a reaching detecting region 7.

Subsequently, in Step S4, analog data of reflected light 4, which is detected by infrared detecting unit 8, is output from infrared detecting unit 8 through digital data converter 9 to arithmetic processor 10. In arithmetic processor 10, spectrum calculator 10a calculates the reflection spectrum of resin 2 based on the input digital data output of reflected light 4.

Subsequently, in Step S5, spectrum processor 10b calculates the spectral intensity for determining a resin by excluding the band (for example, a wavelength band of equal to or longer than 4.18 $\mu$m and equal to or shorter than 4.42 $\mu$m), in which carbon dioxide has the influence described above, from the reflection spectrum calculated by spectrum calculator 10a.

Subsequently, in Step S6, from the spectral intensity for determining the resin which is calculated by spectrum processor 10b, spectrum evaluator 10c calculates and evaluates a correlation coefficient between sample spectra, other than between the sample spectrum that is acquired in advance and is from a resin of which the physical properties are known in advance and the spectral intensity for determining the resin, which is calculated by spectrum processor 10b.

Subsequently, in Step S7, determiner 10d determines that the resin having a correlation coefficient that is equal to or higher than the threshold value and is the highest value is a resin type of resin 2 as the sorting target, based the correlation coefficient between sample spectra and the preset threshold value.

As described above, in the resin determining method according to Embodiment 1, when determination and sorting of resin 2 from the sorting target are performed by using the reflection or absorption spectrum obtained in the mid-infrared region, it is possible to discriminate between resin types of the sorting targets with high accuracy regardless of the color of the resin without an influence of light absorption by carbon dioxide by using the spectral intensity obtained by excluding the wavelength band of equal to or longer than 4.18 $\mu$m and equal to or lower than 4.42 $\mu$m in which the carbon dioxide has an influence of light absorption. In other words, according to the configuration, it is possible to evaluate the reflection or absorption spectrum from the resin without the influence of absorption of light by the carbon dioxide, and it is possible to determine the resin type with high accuracy.

Arbitrary embodiments or modification examples of the various embodiments or modification examples are appropriately combined, and thereby it is possible to achieve the effects of the combined embodiments or modification examples. In addition, it is possible to combine the embodiments with each other, to combine the examples with each other, or to combine the embodiments and the example with each other, and it is also possible to combine features of different embodiments or examples with each other.

In the resin determining method and the resin determining apparatus according to the examples of the disclosure, it is possible to discriminate between resin types of the sorting target with high accuracy regardless of the color of the resin without the influence of light absorption by the carbon dioxide by using the spectral intensity obtained by excluding the wavelength band of equal to or longer than 4.18 $\mu$m and equal to or lower than 4.42 $\mu$m in which carbon dioxide influences the light absorption, and it is possible to rapidly determine the black resins or the like which contains the carbon black (carbon-based fine particles). Therefore, it is possible to use a recycling process or the like for rapid sorting of a plurality of sorting targets.

**Claims**

1. A resin determining method comprising:

   irradiating a sorting target with infrared light;
   receiving reflected light from the sorting target irradiated with the infrared light;
   obtaining correlation information between spectral intensity excluding a wavelength band of equal to or longer than 4.18 $\mu$m and equal to or shorter than 4.42 $\mu$m of a reflection or absorption spectrum obtained with the reflected light and spectrum data of one or more resin types which is acquired in advance; and
   determining the correlation information, which is equal to or higher than a preset threshold value and is a highest value, as a resin type of the sorting target.

2. The resin determining method of Claim 1,
   wherein the correlation information is a correlation coefficient obtained by using reflection spectral intensity.

3. A resin determining apparatus comprising:

   an irradiator that irradiates a sorting target with infrared light;
   a light receptor that receives reflected light from the sorting target irradiated with the infrared light from the irradiator; and
   an arithmetic processor that determines a resin type of the sorting target from a reflection or absorption spectrum of a resin which is the sorting target based on the reflected light,
   wherein the arithmetic processor includes

   a spectrum processor that obtains spectral intensity obtained by excluding a wavelength band of equal to or longer than 4.18 $\mu$m and equal to or shorter than 4.42 $\mu$m of the reflection or absorption spectrum;
   a spectrum evaluator that obtains correlation information between the spectral intensity obtained by the spectrum processor and spectrum data of one or more resin types which is acquired in advance; and
   a determiner that determines the correlation information, which is equal to or higher than a preset threshold value and is a highest value, of the correlation information obtained by the spectrum evaluator, as a resin type of the sorting target.

4. The resin determining apparatus of Claim 3,
   wherein the correlation information is a correlation coefficient obtained by using reflection spectral intensity.

# FIG. 1

EP 3 339 840 A1

FIG. 2

Reflection intensity [Arb.unit]

Black PP resin

Black PS resin

Black ABS resin

White ABS resin

Wavelength band [μm]

FIG. 3

# FIG. 4

Start

S1 | Convey resin

S2 | Irradiate resin with light

S3 | Detect reflected light from resin

S4 | Calculate spectrum intensity

S5 | Exclude region having influence of carbon dioxide

S6 | Evaluate spectrum

S7 | Determine resin type

End

FIG. 5

FIG. 6

EP 3 339 840 A1

Europäisches
Patentamt

European
Patent Office

Office européen
des brevets

# EUROPEAN SEARCH REPORT

Application Number

EP 17 20 3306

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/203177 A1 (KINUGAWA MASARU [JP] ET AL) 24 July 2014 (2014-07-24) <br> * figure 1 * <br> * paragraphs [0007], [0034] - [0043], [0070], [0079], [0122] - [0127] * <br> ----- | 1-4 | INV. <br> G01N21/3563 <br> B07C5/342 <br> G01N33/44 <br> B29B17/02 |
| X | JP 2006 084350 A (JT ENGINEERING INC) 30 March 2006 (2006-03-30) <br> * paragraphs [0009] - [0013], [0024], [0025] * <br> ----- | 1-4 | ADD. <br> G01N21/84 |

TECHNICAL FIELDS
SEARCHED (IPC)

G01N
B07C
B29B

The present search report has been drawn up for all claims

| Place of search | Date of completion of the search | Examiner |
|---|---|---|
| Munich | 29 January 2018 | Flentje, Farida |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 20 3306

This annex lists the patent family members relating to the patent documents cited in the above-mentioned European search report.
The members are as contained in the European Patent Office EDP file on
The European Patent Office is in no way liable for these particulars which are merely given for the purpose of information.

29-01-2018

| Patent document cited in search report | | Publication date | Patent family member(s) | | Publication date |
|---|---|---|---|---|---|
| US 2014203177 | A1 | 24-07-2014 | CN 103940772 A | | 23-07-2014 |
| | | | JP 6137987 B2 | | 31-05-2017 |
| | | | JP 2014157148 A | | 28-08-2014 |
| | | | US 2014203177 A1 | | 24-07-2014 |
| JP 2006084350 | A | 30-03-2006 | NONE | | |

For more details about this annex : see Official Journal of the European Patent Office, No. 12/82

**REFERENCES CITED IN THE DESCRIPTION**

**Patent documents cited in the description**

- JP 5367145 B